# EUROPEAN PATENT APPLICATION

(11) **EP 2 429 156 A1**
(43) Date of publication of application: **14.03.2012**
(21) Application number: 11177076.4
(22) Date of filing: 10.08.2011
(51) Int. Cl.: H04M 1/50

(54) **Apparatus, and associated method, for providing support-call data pursuant to a wireless device support call**

(30) Priority: 14.09.2010 US 881623
(71) Applicant: RESEARCH IN MOTION LIMITED, Waterloo, Ontario N2L 3W8 (CA)
(72) Inventor: Diaz, Roberto, Rolling Meadows, IL Illinois 60008 (US)
(74) Representative: Noble, Nicholas

(57) **Abstract**

An apparatus, and an associated method, facilitates communication of mobile-station data for example the IMSI, IMEI, MEID or phone number to a support center so that a support issue related to the mobile station can best be addressed by the support-center personnel. A user of the mobile station initiates a call to the support center, and a voice connection is formed between the mobile station and the support center. A support-call data signal generator generates a data signal containing support-call data e.g. the IMSI. The data signal is sent, in-band e.g. using DTMF on a voice channel defined by the voice connection and delivered to the support center. The data is used at the support center to respond to the support issue or inquiry.

## Description

The present disclosure relates generally to a manner by which to provide wireless-device-related data to a support, or other, center pursuant to a call placed to the center. More particularly, the present disclosure relates to an apparatus, and an associated method, by which to send the data to the remote center during a voice call connection with the remote center.

A data signal that includes data needed by the center to respond to the call. The data signal is formed and sent, e.g., in-band with voice communications on a voice channel formed by way of a voice connection created between the wireless device and the remote center. A caller is not required to answer questions of support center personnel to provide needed support-call data. Rather, the caller merely initiates the sending of the data signal.

### Background

Wireless devices are used by many through which to communicate. Mobile stations used in cellular, and cellular-like, communication systems are exemplary of such wireless devices. While early-generation, cellular communication systems and mobile stations operable therein provided for voice communications and limited data communications, successor-generation systems and mobile stations operable therein have provide for increasingly data-intensive communication services.

The mobile stations and, more generally, wireless devices used in various analogous communication systems, are relatively complex and are typically operable pursuant to a subscription for service or other authorization for access to a network. The network with which the mobile station communicates is typically managed and controlled by a network operator.

Access by a mobile station to a communication network is controlled to ensure that access to a network is permitted only to mobile stations that are authorized to access the network. A mobile station is typically identified, not only with a telephone number, but also by additional identifiers, such as an TMSI (International Mobile Station Identifier), a serial number, a mobile-station model number, an IMEI (International Mobile Equipment Identity), an MEID (Mobile Equipment Identifier), as well as any of various other identifiers. Different ones of these values, or others, are used pursuant to operation of the mobile station to access and to communicate by way of the communication network. The identifiers are sometimes of lengthy sequences of alphanumeric characters that, unlike telephone numbers, are usually not memorized or readily known by a user of the mobile station. And, many users likely have no knowledge of the existence of such identifiers as use of such identifiers is typically transparent to a user during operation of the mobile station.

However, in the event that an operational, or other, difficulty arises, which necessitates a call to a support center, the user might be required to identify various of the mobile-station identifiers in order for the appropriate support to be provided to correct the support issue. When the call is placed by the user by way of the affected mobile station, the user might have difficulty obtaining identification of the required identifiers. While the support-center personnel can provide the user with voice instructions to instruct the user how to obtain the needed information, the user typically must juggle the mobile station, alternately to listen, and talk, to the support-center personnel and to manipulate the mobile station in order to obtain the needed information in the instructed manner.

The mobile station includes, e.g., menu displays displayable at a display screen of a user interface, and the user of the mobile station sometimes must manipulate the display-screen menus in order to obtain the needed information at the display screen, then read the displayed information and to voice the values so that the support-center personnel are provided with the information. Not only is this conventional practice inconvenient, but the conventional process is also prone to error. The user might misread the information, and, when the value is read and spoken to the support-center personnel, the support-center personnel might incorrectly hear or mis-type the value. Additionally, the conventional process is time-consuming, sometimes also requiring the support-center personnel laboriously to provide instructions to the users for the user to manipulate the mobile station to obtain the needed information. This procedure results in increased support costs and also might result in a poor user experience.

It is in light of this background information related to wireless devices that the significant improvements of the present invention have evolved.

### Brief Description of the Drawings

Figure 1 illustrates a functional block diagram of a communication system in which an embodiment of the present disclosure is operable.

Figure 2 illustrates a representation of an exemplary screen display generated pursuant to operation of an embodiment of the present disclosure.

Figure 3 illustrates a message sequence diagram representative of exemplary operation of the communication system shown in Figure 1 pursuant to operation of an embodiment of the present disclosure.

Figure 4 illustrates a method sequence diagram representative of the method of operation of an embodiment of the present disclosure.

### Detailed Description

The present disclosure, accordingly, advantageously provides an apparatus, and an associated method, by which to provide wireless-device-related data to a remote support, or other, center pursuant to a call to the remote center.

Through operation of an embodiment of the present disclosure, a manner is provided by which to send the data to the remote center during a voice call connection with the remote center.

In one aspect of the present disclosure, a data signal is formed and sent, e.g., as an in-band signal with voice communication signals made by way of a voice channel formed between the wireless device and the remote center. Formation and sending of the data signal is automatically carried out subsequent to initiation of its sending by a user of the wireless device. Thereby, the caller need not ascertain the information and provide the information by voice to the remote center.

In another aspect of the present disclosure, a voice-call connection is created between the wireless device and the remote, support center. Support-call data needed by the support center is provided by way of a data signal, comprising an in-band signal communicated by way of the voice channel defined by the voice connection formed between the mobile station and the remote, support center.

In another aspect of the present disclosure, the support-call data signal is generated responsive to initiation by a user of the wireless device. The user initiates the generation, e.g., responsive to request made by support-center personnel subsequent to formation of the voice connection between the wireless device and the support center. The initiation of the generation of the support-call data signal is made responsive to support-center personnel request when support-call data is determined by the support center personnel to be required to respond to a request for wireless-device support. Or, the user initiates generation of the support-call data signal without support-center request.

In another aspect of the present disclosure, the user of the wireless device initiates the generation of the support-call data signal through selection made from a menu displayed at a screen display. The menu includes an entry that, when selected, provides for the generation of the support-call data signal. The entry is selected by the user by way of a user actuator, such as an actuation key of the wireless device, an interactive screen input, or other input mechanism.

In another aspect of the present disclosure, the support-call data signal comprises an audio signal, such as a DTMF (Dual Tone Multi Frequency) whose values together comprise the set of data needed by support personnel to respond to a support request.

In another aspect of the present disclosure, the support-call data signal alternately comprises a digital signal forming an inaudible, in-band signal that is conveyed by the wireless device to the support center by way of the already-established voice call connection.

In another aspect of the present disclosure, an audio interface is provided at the remote, support center. The audio interface is used during an established voice call with the wireless device. Once received, the informational content of the received signal is used by support-center personnel to facilitate a response to the support request.

In another aspect of the present disclosure, the data contained in the support-call data signal received at the support center is displayed at a display. The data is, for example, populated into a screen display, thereby to provide the support-center personnel the received information regarding the wireless device in a form facilitating its ready review by the support-center personnel, ready to be used to facilitate a response to the support request.

Thereby, the needed information is provided to the support center without necessitating that the user manipulate the wireless device to access and ascertain the needed information and then communicate the information to the remote center.

In these and other aspects, therefore, an apparatus, and an associated method, is provided for facilitating communication of support-call data by a wireless device pursuant to a support call. A support-call data signal generator is configured to generate a data signal containing the support-call data. A data signal sender is configured to send the data signal generated by the data signal sender during the support call.

In these and further aspects, therefore, an apparatus, and an associated method, is also provided for facilitating wireless-device support pursuant to a support call placed to a support center. A data signal receiver is configured to receive a wireless-device-sent data signal that contains support-call data. The wireless-device-sent data signal is sent during the support call. A data converter is configured to convert the support-call data contained in the wireless-device-sent data received by the data signal receiver into a form usable by the support center during the support call.

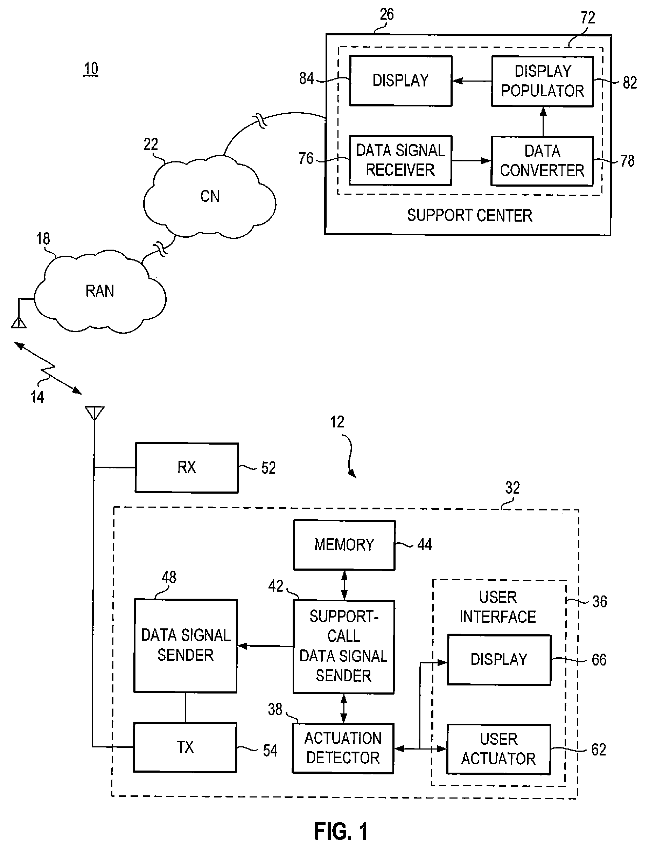

Turning first, therefore, to Figure 1, a communication system, shown generally at 10, provides for radio communication with wireless devices, of which the mobile station 12 is representative. While the following description shall describe exemplary operation of the communication system in its exemplary implementation in which the communication system operates in general conformity with a cellular communication system standard, the communication system is more generally representative of any various radio communication systems in which communications are effectuated with wireless devices.

Communications with the mobile station are carried out by way of a radio air interface, here represented by the arrow 14, defined between the mobile station and a network part of the communication system, here formed of a Radio Access Network (RAN) 18 and a Core Network (CN) 22. The networks 18 and 22 are placed in communication connectivity with one another in conventional manner. In the exemplary implementation, Core Network forms a packet data network to which communication entities are placeable in communication connectivity. Here, a support center 26 is positioned in communication connectivity with the core network 22. The support center is representative of an entity that provides support for operations of the mobile station and communications thereof in the communication system. The support center is variously operated by an entity associated with an operator of the network 18, an entity associated with the manufacturer or seller of the mobile station 12, or any other entity that the user of the mobile station 12 might need to contact in order to obtain operational support related to a communication, or other aspect, of the mobile station 12 or its operation in the communication system 10.

Therefore, pursuant to any of various motivations, the user of the mobile station might be in need of support or other assistance by personnel of the support center regarding some aspect of the mobile station or its operation in the communication system 10. Typically, a support call is originated by the user of the mobile station, and a voice connection is formed between the mobile station and suitable communication devices at the support center that provides for telephonic communications. As mentioned previously, however, once the call connection is formed, personnel at the support center sometimes require specific information regarding the mobile station values of its identifiers, such as the aforementioned IMEI, IMSI, MEID values, etc. This information conventionally is required to be obtained by the user of the mobile station and spoken to the personnel of the support center during the call. To obtain the needed information, the user of the mobile station sometimes is required to manipulate the mobile station, such as through requesting and viewing successive screen displays in order to obtain the needed information. Obtaining the information is sometimes cumbersome and prone to error.

The mobile station 12 of an embodiment of the present disclosure includes apparatus 32 of an embodiment of the present disclosure by which to facilitate the communication of information needed of a support center to facilitate a response to the support request. The apparatus 32 is functionally represented, formed of functional entities that are implementable in any desired manner, including hardcore elements, algorithms executable by processing circuitry, and variants thereof. In one implementation, for instance, the apparatus 32 comprises a processing device to which input signals are provided and from which output signals are generated. In another implementation, functions are carried out using discrete elements.

The apparatus 32 is here shown to include a user interface 36, an actuation detector 38, a support-call data signal generator 42, a memory 44, and a data signal sender 48. The apparatus 32 forms part of the mobile station and operates during operation of the mobile station including during when a voice connection is formed and maintained by transceiver circuitry, here represented by a receive(RX) part 52 and a transmit (TX) part 54. The apparatus functions, amongst other things, to provide personnel of the support center with mobile-station-related information that facilitates a response to the support issue involved in the support request.

When the voice connection is formed between the mobile station and the support center pursuant to the call or support, personnel of the support center are able to request additional information regarding the mobile station. And, in response, or otherwise, a user of the mobile station initiates operation of the apparatus 32 to generate a support-call data signal that includes a set of information relating to the mobile station and its operation.

In the exemplary implementation, the user initiates operation by actuating a user actuator 62 of the user interface 36. The user actuator comprises, e.g., an actuation key. The actuation key, in one implementation, operates in conjunction with a screen display displayable upon a display screen. In one implementation, the user interface 36 comprises an interactive screen display. And, the user makes selection to initiates operation through selection of an appropriate menu entry displayed on the display. User initiation facilitates secure operation as an unauthorized, external requestor that makes request for the information is less likely to be able to obtain information about the mobile station as the user must approve release of the information. Additionally, user initiation also acts as a legal authorization of release of the information.

Actuation of the actuator to initiate the operation is detected by the actuation detector 38. And, an indication of the actuation is provided to the support-call data signal generator 42. The generator 42 operates to generate a support-call data signal that contains a set of data comprising any of various information that might be needed by the support center. For instance, the data includes the model number of the mobile station, the phone number of the mobile station, the IMSI of the mobile station, the serial number, IMEI, MEID, and/or PIN of the mobile station. Other, values and amounts of data are alternately included in the support-call data signal. In the exemplary implementation shown in Figure 1, the information forming the data of the support-call data signal is stored at the memory element 44. The contents of the memory 44 are accessed, and appropriate values are retrieved and used to form the support-call data signal.

In one implementation, the data is formatted as key-value pairs, or as fixed fields, etc. In one implementation, DTMF (Dual Tone Multi Frequency) coding is used. The values are converted into decimal values. And, Delimiters, such as "*" and "#" tones are utilized. An exemplary, tone sequence comprises:
##0*26843*54561 *59175*1049#01 *821086394## to indicate an MEID value of 26843 54561 59175 1049 and a PIN value 821086394. Delimiters of "##" indicate the beginning and end of data and single number signs "#" indicates a new key-value pair. And, here, the two digits following the "number" sign are a numeric identifier of the key in which a plurality of different keys, e.g., 100 different keys, are possible. The character "*" identifies the start of a value or indicates subfields within the value. And, key 00 identifies the MEID/IMSI, and the 01 identifies the PIN value.

Once generated, the signal is provided to a data signal sender 48 that operates to send, in conjunction with the transmit part 54, the support-call data signal. The signal is sent in-band in the voice channel defined by the voice-connection formed between the mobile station and the support center.

The support center also includes apparatus, here designated as apparatus 72, of an embodiment of the present disclosure. The elements of the apparatus 72 are also functionally shown, implementable in any desired manner including, for instance, algorithm executable by processing circuitry, hardware devices, and combinations and variants thereof. In one implementation, the apparatus includes a processing device having algorithm executable thereat to carry out certain of the functions of the apparatus.

Here, the apparatus 72 includes a data signal receiver 76, a data converter 78, a display populator 82 and a display device 84.

The data signal receiver operates to detect and to receive a support-call data signal sent by the mobile station and routed by way of the radio air interface and the networks 18 and 22 to the support center. The receive signal is provided to the data converter 72, which operates to convert the data contained in the signal into a form permitting its display on the display element 84. In the exemplary implementation, the data converter provides the data to a display populator 82 that operates to populate a screen display with the data to facilitate its display at the display device 84. By providing the display at the display element 84, the support personnel at the support center are able to more readily and quickly review the communicated data, better to provide support to respond to the support issue.

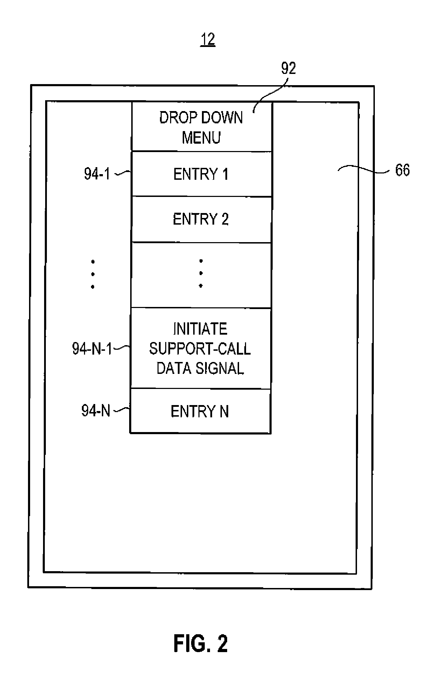

Figure 2 illustrates an exemplary screen display displayed at a display element 66 of the user interface of the mobile station. The display here shows a drop-down menu 92 that includes a plurality of menu entries 94. Here, menu entry 94-N-1 comprises a menu entry for initiating generation of the support-call data signal. When the user of the mobile station elects to send the mobile-station information to the support center, the user selects the menu entry 94-N-1. And, responsive to the selection, the support-call data signal is generated and communicated to the support center, e.g., in-band with the voice call.

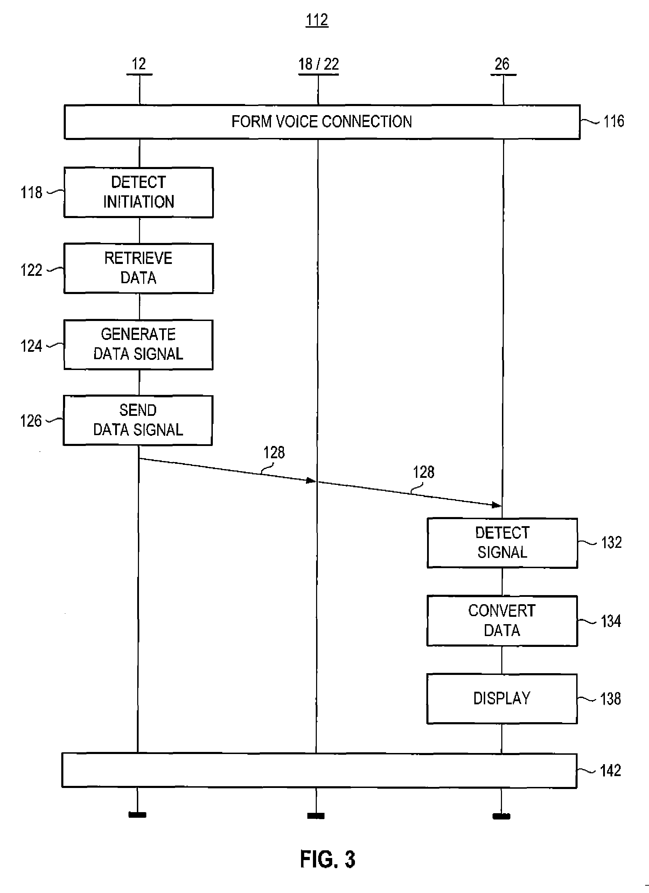

Figure 3 illustrates a sequence diagram, shown generally at 112, representative of exemplary operation of the communication system 10 shown in Figure 1. Again, the mobile station 12 and support center 26 are place able in communication connectivity by way of the network 18-22.

A voice connection is formed, indicated by the block 116 between the mobile station and the support center. The voice connection is formed, e.g., by a call placed by the mobile station to the support center. Once the voice connection is formed, the user of the mobile station elects to initiate the generation and sending of the support-call data signal to the support center. The user initiates the operation, and the mobile station detects the initiation command, the data that is to be contained in the data signal is retrieved, indicated by the block 122. And, as indicated by the block 124, the support-call data signal is generated.

Then, and as indicated by the block 126, the data signal is sent. The data signal is communicated, indicated by the segments 128, and delivered to the support center 26. The signal is sent in-band in the voice channel defined by the voice connection.

The signal is detected, indicated by the block 132 at the support center. And, the data contained in the data signal is extracted and converted, indicated by the block 134 into a form to facilitate its display. Then, and as indicated by the block 138, the data is displayed.

Then, and as indicated by the block 142, further actions are made by the support center to respond to the support issue that necessitated the call to the support center.

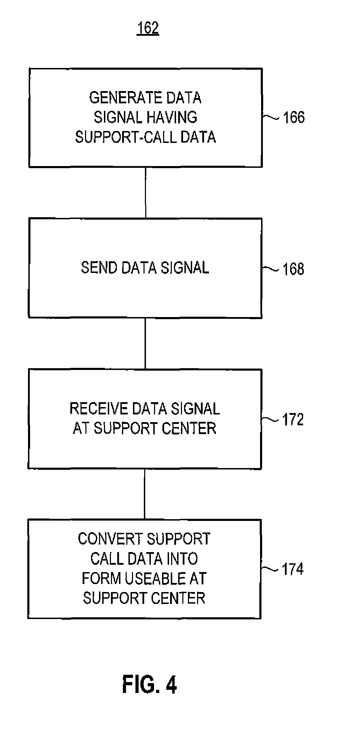

Figure 4 illustrates a method flow diagram, shown generally at 162, representative of the method of operation of an embodiment of the present disclosure. The method facilitates communication of support-call data pursuant to a support call placed by a wireless device to a support center.

First, and as indicated by the block 166, a data signal containing the support-call data is generated. Then, and as indicated by the block 168, the data signal is sent.

Thereafter, and as indicated by the block 172, the data signal is received at the support center. And, as indicated by the block 174, the support-call data is converted into a form usable by the support center during a support call.

Thereby, the data related to the wireless device that is needed at the support center to respond best to a support issue or inquiry is sent automatically, under the mobile-station user's control, without necessitating that the user manipulate the wireless device to obtain the information and report the information to the support center.

Presently preferred embodiments of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating communication of support-call data by a wireless device pursuant to a support call, said apparatus comprising:
a support-call data signal generator configured to generate a data signal containing the support-call data; and
a data signal sender configured to send the data signal generated by said data signal sender during the support call.

2. The apparatus of claim 1 further comprising an initiator configured to initiate the communication of the support-call data.

3. The apparatus of claim 1 wherein said support-call data signal generator is configured to generate audio tones.

4. The apparatus of claim 1 wherein said signal support-call data signal generator is configured to generate inaudible digital-formatted signal values.

5. The apparatus of claim 1 wherein said support-call data signal generator is configured to generate an in-band data signal.

6. The apparatus of claim 1 wherein said data signal sender is configured to send the data signal-in-band with a voice connection formed pursuant to the support call.

7. An apparatus for facilitating wireless-device support pursuant to a support call placed to a support center, said apparatus comprising:
a data signal receiver configured to receive a wireless-device-sent data signal that contains support-call data, the wireless-device-sent data signal sent during the support call; and
a data converter configured to convert the support-call data contained in the wireless-device-sent data signal received by said data signal receiver, into a form usable by the support center during the support call.

8. The apparatus of claim 7 further comprising a data displayer configured to display the support-call data once converted by said data converter.

9. The apparatus of claim 8 further comprising a display populator configured to populate a screen display provided by said data displayer with the support-call data.

10. The method of claim 7 wherein the wireless-device-sent data signal received by said data signal receiver comprises a wireless-device-initiated data signal.

11. A method for facilitating communication of support-call data by a wireless device pursuant to a support call, said method comprising:
generating a data signal containing the support-call data; and
sending the data signal, generated during said generating the data signal, during the support call.

12. The method of claim 11 wherein the data signal generated during said generating comprises a wireless-device-initiated data signal.

13. The method of claim 11 wherein said sending comprises sending the data signal in-band with a voice connection during the support call.

14. A method for facilitating wireless-device support pursuant to a support call placed to a support center, said method comprising:
receiving a wireless-device-sent data signal that contains support-call data, the wireless-device-sent data signal sent data signal sent during the support call; and
converting the support-call data contained in the wireless-device-sent data signal received during said receiving into a form usable by the support center during the support call.

15. The method of claim 14 further comprising displaying the support-call data at the support center.
